# EUROPEAN PATENT APPLICATION

(11) **EP 4 385 605 A1**
(43) Date of publication of application: **19.06.2024**
(21) Application number: 22856257.5
(22) Date of filing: 11.08.2022
(51) Int. Cl.: B01D 39/16, D01D 5/00, D06M 11/83

(54) **FILTER AND METHOD FOR MANUFACTURING SAME**

(30) Priority: 12.08.2021 KR 20210106791
(71) Applicant: LG Electronics Inc., Yeongdeungpo-gu Seoul 07336 (KR)
(72) Inventor: BAECK, Seungjae, Seoul 08592 (KR); HYUN, Okchun, Seoul 08592 (KR); LEE, Yanghwa, Seoul 08592 (KR); LEE, Hyoseok, Seoul 08592 (KR)
(74) Representative: Vossius & Partner Patentanwälte Rechtsanwälte mbB
(86) International application number: PCT/KR2022/012049
(87) International publication number: WO 2023/018264

(57) **Abstract**

A filter and a method for manufacturing same are disclosed. The filter including nanofibers formed by electrospinning comprises: a base having conductivity; and a nanofiber web formed by attaching the nanofibers on the base. The method for manufacturing the filter by attaching nanofibers on a base comprises the steps of: filling a syringe having a nozzle with a polymer solution, which is a raw material of the nanofibers; applying a +high voltage to the nozzle; and spinning the nanofibers from the nozzle toward the base. The base functions as a counter electrode of the nozzle.

## Description

### Technical Field

The present disclosure relates to a filter and a method for manufacturing the same. Particularly, the present disclosure relates to a nanofiber filter and a method for manufacturing the same.

### Background Art

An air purifier is a device that purifies indoor polluted air and improves indoor air quality. Generally, an air purifier is provided with a filter that filters out fine substances such as fine dust, bacteria, or viruses floating in the air.

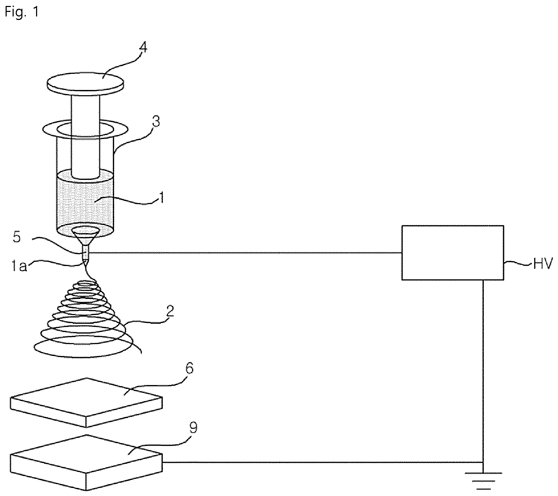

For example, a filter may include nanofibers manufactured by an electrospinning device of FIG. 1. Specifically, a polymer solution 1 contained in a syringe 3 is discharged to the outside from a nozzle 5 by a pump 4. In this case, the polymer solution 1 is formed as a droplet at the tip of the nozzle 5 and is ejected from the nozzle 5 toward a ground electrode 9 to spin a nanofiber 2 with a diameter of tens to hundreds of nanometers by a high voltage applied from a high voltage source HV. Spun nanofibers 2 are collected on a collector 6 placed between the nozzle 5 and the ground electrode 9, and the collector 6 on which the nanofibers 2 are stacked constitutes a filter. The nanofibers 2 manufactured by such electrospinning are affected by the material properties of the polymer solution 1, such as properties, molecular structures, viscosity, elasticity, dielectric property, polarity, and surface tension, and by spinning conditions, such as the intensity of the electric field, and a distance between the nozzle 5 and the collector 6, and the supply speed and temperature of the polymer solution 1.

However, a filter manufactured by using the above method generates electrostatic force. That is, the electrostatic force of the filter manufactured in the above manner continuously decreases due to contact of moisture with the filter or adhesion of organic substances to the filter, and as a result, the dust collection efficiency of the filter continues to decrease. Post-processing the filter by using IPA (isopropanol) to remove this electrostatic force may damage the filter or reduce efficiency thereof.

In addition, the collector 6 as a dielectric may be a non-woven fabric made of a fibrous material, but in this case, the nanofibers 2 are unevenly attached to the collector 6 due to the curvature of the surface of the collector 6 or the polarity of the surface of the collector 6 in an electric field.

### Disclosure

### Technical Problem

The present disclosure aims to solve the foregoing and other issues.

Another purpose may be to provide a nanofiber filter that can minimize a decline in dust collection efficiency over time.

Another goal may be to provide a filter that can increase the adhesion of a nanofiber to a base.

Another goal may be to provide a filter that can have a nanofiber with a uniform diameter.

Another purpose may be to provide a filter that can have various effects such as antibacterial effect and photodecomposition effect of harmful substances.

Another goal may be to provide a filter that can minimize physical and chemical damage to a nanofiber web.

### Technical Solution

In order to accomplish the above objectives, according to one aspect of the present disclosure, there is provided a filter having nanofibers formed by electrospinning, the filter including: a base having conductivity; and a nanofiber web formed by attaching the nanofibers on the base.

In addition, according to another aspect of the present disclosure, the base may include: a non-woven fabric made of a fibrous material; and a conductive material provided on the non-woven fabric or coated on the non-woven fabric.

In addition, according to another aspect of the present disclosure, the conductive material may be an antibacterial metal or an antibacterial metal oxide.

In addition, according to another aspect of the present disclosure, the antibacterial metal may include copper (Cu), silver (Ag), gold (Au), or platinum (Pt), and the antibacterial metal oxide may include zinc oxide (ZnO), copper oxide (Cu₂O, CuO), or titanium dioxide (TiO₂).

In addition, according to another aspect of the present disclosure, the base may include: a woven fabric made of a fibrous material; and wires having conductors, intersecting the woven fabric, and being disposed at regular intervals on the woven fabric.

In addition, according to another aspect of the present disclosure, the wires may further include insulating materials covering the conductors.

In addition, according to another aspect of the present disclosure, the filter may further include: a protective layer attached on the nanofiber web by a hot-melt adhesive, wherein the protective layer may be a non-woven or woven fabric made of a fibrous material, or PTFE.

In addition, according to another aspect of the present disclosure, the protective layer may further include an antibacterial agent coated on the protective layer, wherein the antibacterial agent may be an antibacterial metal or an antibacterial metal oxide.

In addition, according to another aspect of the present disclosure, the base may include: a non-woven fabric made of a fibrous material; and a conductive material provided on the non-woven fabric or coated on the non-woven fabric, with the conductive material being an antibacterial metal or an antibacterial metal oxide, wherein the conductive material may be the same as or different from the antibacterial agent.

In addition, according to another aspect of the present disclosure, the protective layer may further include a photocatalyst coated on the protective layer.

In addition, according to another aspect of the present disclosure, a raw material for each of the nanofibers may include PAN, PES, PA, or PVDF, and the base may include PP, PE, PET, PES, or PA.

In addition, according to another aspect of the present disclosure, there is provided a method for manufacturing a filter by attaching nanofibers on a base, the method including: filling a syringe having a nozzle with a polymer solution which is a raw material of each of the nanofibers; applying a + high voltage to the nozzle; and spinning the nanofibers from the nozzle toward the base, wherein the base functions as a corresponding electrode of the nozzle.

In addition, according to another aspect of the present disclosure, the base may have a ground electrode, or a - high voltage may be applied thereto.

### Advantageous Effects

The effects of the filter and the method for manufacturing the same according to the present disclosure are described as follows.

According to at least one of the embodiments of the present disclosure, a nanofiber filter that can minimize the decline in dust collection efficiency over time can be provided.

According to at least one of the embodiments of the present disclosure, a filter in which the adhesion of the nanofiber to the base can be increased can be provided.

According to at least one of the embodiments of the present disclosure, a filter capable of having a nanofiber with a uniform diameter can be provided.

According to at least one of the embodiments of the present disclosure, a filter that can have various effects such as an antibacterial effect and a photodecomposition effect of harmful substances can be provided.

According to at least one of the embodiments of the present disclosure, a filter that can minimize physical and chemical damage to the nanofiber web can be provided.

Additional scope of applicability of the present disclosure will become apparent from the detailed description below. However, since various changes and modifications within the spirit and scope of the present disclosure can be clearly understood by those skilled in the art, the detailed description and specific embodiments, such as preferred embodiments of the present disclosure, should be understood to be given only as examples.

### Description of Drawings

FIG. 1 is a perspective view of an electrospinning device for manufacturing a nanofiber filter according to a prior art.
FIG. 2 is a perspective view of an electrospinning device for manufacturing a nanofiber filter according to an embodiment of the present disclosure.
FIG. 3 is a perspective view of an electrospinning device for manufacturing a nanofiber filter according to another embodiment of the present disclosure.
FIG. 4 is an optical microscope photo of a conductive base having non-woven fabric and metal components in the present disclosure.
FIG. 5 is an optical microscope photo of a conductive base having woven fabric and enamel lines in the present disclosure.
FIG. 6 is a flowchart of a method for manufacturing a filter according to the embodiment of the present disclosure.
FIG. 7 is a cross-sectional view of the filter according to the embodiment of the present disclosure.
FIG. 8 is a graph comparing the electrostatic forces of the nanofiber filter according to the prior art and the nanofiber filter according to the present disclosure.
FIG. 9 is a cross-sectional view of the filter having a protective layer according to the embodiment of the present disclosure.

### Mode for Invention

Hereinafter, embodiments disclosed in the present specification will be described in detail with reference to the accompanying drawings. However, identical or similar components will be assigned the same reference numbers regardless of reference numerals, and duplicate descriptions thereof will be omitted.

Suffixes "module" and "part" for components used in the following description are given or used interchangeably only for the ease of preparing the specification, and do not have distinct meanings or roles in themselves.

Additionally, in describing the embodiments disclosed in this specification, when it is determined that detailed descriptions of related known technologies may obscure the gist of the embodiments disclosed in this specification, detailed descriptions thereof will be omitted. In addition, the accompanying drawings are only for easy understanding of the embodiments disclosed in this specification, and it should be understood that the technical idea disclosed in this specification is not limited by the accompanying drawings, but includes all changes, equivalents, and substitutes included in the spirit and technical scope of the present disclosure.

Terms containing ordinal numbers, such as first, and second, etc., may be used to describe various components, but the components are not limited by the terms. The terms are used only for the purpose of distinguishing one component from another.

When a component is said to be "connected" or "coupled" to another component, it is understood that it may be directly connected to or coupled to the another component, but that other components may exist therebetween. On the other hand, when it is mentioned that a component is "directly connected" or "directly coupled" to another component, it should be understood that there are no other components therebetween.

Singular expressions include plural expressions unless the context clearly dictates otherwise.

In the following description, although embodiments are described with reference to specific drawings, if necessary, reference numbers not appearing in the specific drawings may be mentioned, and are used when the reference numbers appear in other figures.

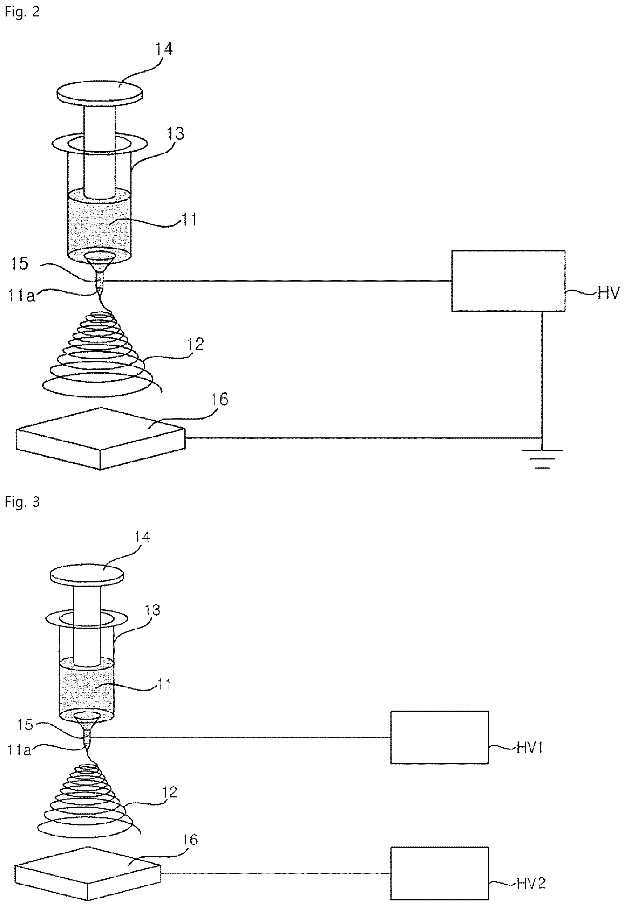

Referring to FIGS. 2 and 3, a filter may include nanofibers manufactured by an electrospinning device.

A polymer solution 11 may be a raw material for each of the nanofibers. For example, the polymer solution may include materials such as polyacrylonitrile (PAN), polyethersulfone (PES), polyamide (PA), or polyvinylidene fluoride (PVDF), etc. The polymer solution 11 may be accommodated in a syringe 13, and may be pressed into a nozzle 15 provided on one side of the syringe 13 by a pump 14. The nozzle 15 may be referred to as a needle. The polymer solution 11 may be formed into a droplet at the tip of the nozzle 15.

For example, referring to FIG. 2, a high voltage source HV may apply a + high voltage to the polymer solution 11, and a ground electrode may be formed on the base 16. For example, a voltage applied to the nozzle 15 from the high voltage source HV may be a high voltage of about 20kV or more.

For another example, referring to FIG. 3, a first high voltage source HV1 may apply a + high voltage to the polymer solution 11, and a second high voltage source HV2 may apply a - high voltage to the base 16. This case may be advantageous to increase the intensity of an electric field compared to the case of FIG. 2.

Referring to FIGS. 2 and 3, when an electric field greater than the surface tension of the polymer solution 11 is formed, the polymer solution 11 may be ejected from the nozzle 15 toward the base 16 to spin nanofiber 12 with a diameter of tens to hundreds of nanometers. In this case, a Taylor cone 11a may be observed at the end of the nozzle 15.

Accordingly, the nanofiber 12 spun from the nozzle 15 may be attached to the base 16. In this case, since the base 16 functions as a corresponding electrode of the nozzle 15, the nanofiber 12 may be more strongly attached to the base 16 due to an enhanced electrical effect. In addition, the voltage uniformity of the nozzle 15 and the base 16 and the spin uniformity of the nanofiber 12 are improved, and thus the properties of the nanofiber 12, such as having a uniform diameter thereof, may be improved. Meanwhile, the base 16 may be referred to as a support or substrate.

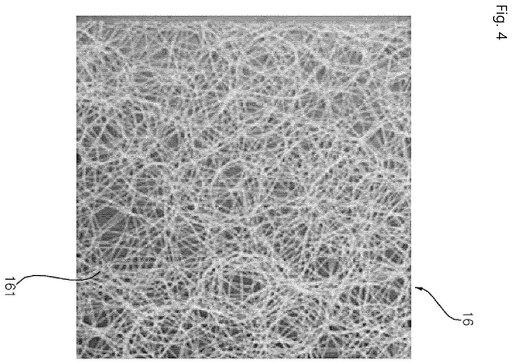

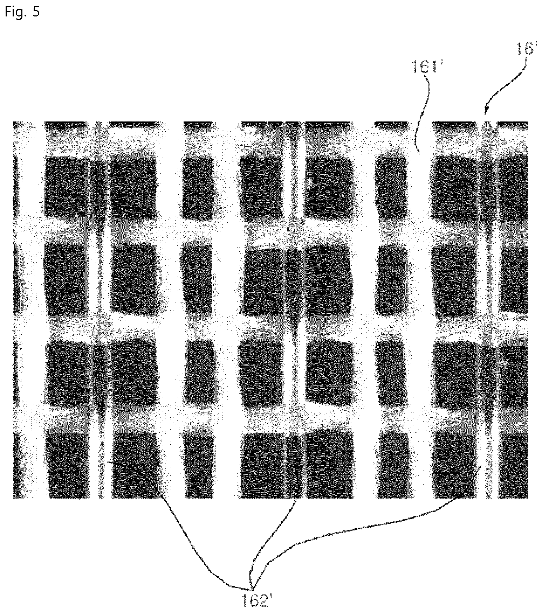

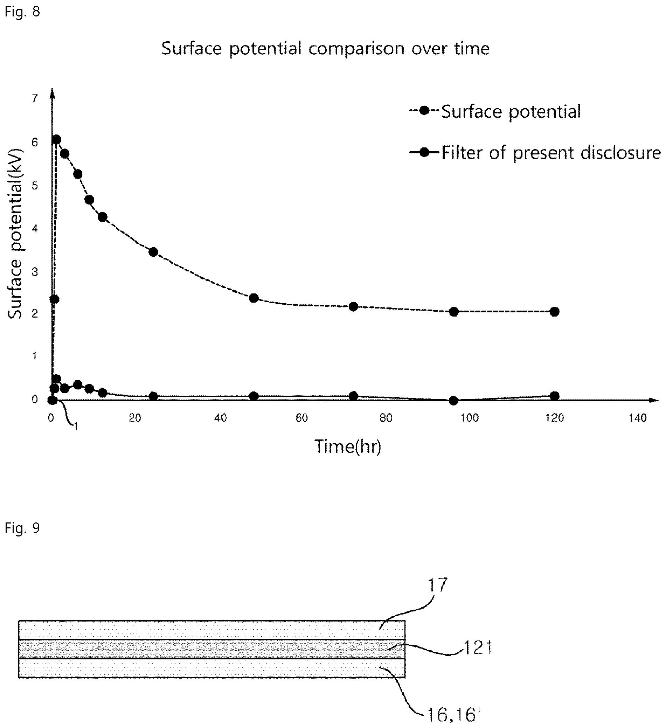

Referring to FIG. 4, the base 16 may be conductive. The base 16 may include a porous non-woven fabric 161 made of a fibrous material and a conductive material. For example, the non-woven fabric 161 may include a material such as polypropylene (PP), polyethylene (PE), polyethylene terephthalate (PET), polyethersulfone (PES), or polyamide (PA). The conductive material may be provided on the non-woven fabric 161 or coated on the non-woven fabric 161. For example, the conductive material may include a metal material such as copper, or a carbon material. Accordingly, a voltage applied to the base 16 may be evenly distributed over the base 16. Meanwhile, considering what will be described later with reference to FIG. 8, the base 16 may be more advantageous than the base 16' (see FIG. 5) with insulated wires 162' (see FIG. 5) in removing charges on a filter surface or in preventing electrostatic force from being formed thereon.

For example, the conductive material may be an antibacterial agent. The antibacterial agent may be an antibacterial metal or an antibacterial metal oxide. The antibacterial metal may include copper (Cu), silver (Ag), gold (Au), or platinum (Pt). The antibacterial metal oxide may include zinc oxide (ZnO), copper oxide (Cu₂O, CuO), or titanium dioxide (TiO₂). Accordingly, the filter having the base 16 may have an antibacterial effect and may inhibit the growth or survival of microorganisms in the air.

Referring to FIG. 5, the base 16' may be conductive. The base 16' may include porous woven fabric 161' made of a fibrous material and wires 162' to which a voltage is applied.

For example, each of the woven fabrics 161' may include a material such as polypropylene (PP), polyethylene (PE), polyethylene terephthalate (PET), polyethersulfone (PES), or polyamide (PA).

For example, each of the wires 162' may include a conductor such as copper (Cu) and aluminum (Al). For another example, the wire 162' may include the conductor and an insulating material covering the conductor, and in this case, the wire 162' may be referred to as an insulated wire 162'. For example, the insulated wire 162' may be an enameled wire. Meanwhile, considering what will be described later with reference to FIG. 8, a wire 162' (for example, a copper wire) consisting of only a conductor may be more advantageous than the insulated wire 162', such as an enamel wire, in removing charges on a filter surface or in preventing electrostatic force from being formed thereon.

For example, the wires 162' may intersect the woven fabric 161' and may be disposed at regular intervals on the woven fabric 161'. Accordingly,a voltage applied to the base 16' may be evenly distributed over the base 16'. Meanwhile, the base 16' may be referred to as a support or substrate.

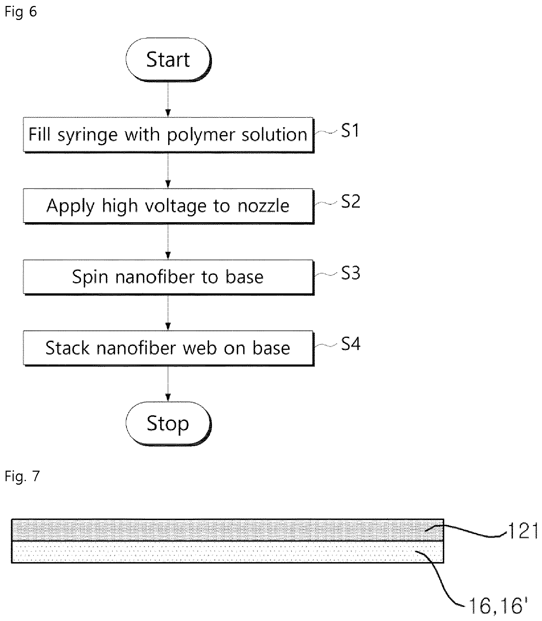

Referring to FIGS. 6 and 7, the filter 16 and 121 or 16' and 121 may be manufactured by the following method. The polymer solution 11 may be charged to the syringe 13 at S1, and a +high voltage may be applied to the nozzle 15 at S2. In this case, the base 16 or 16', which functions as the corresponding electrode of the nozzle 15, may have the ground electrode, or a - high voltage may be applied thereto. When the polymer solution 11 is pressurized by the pump 14 and the intensity of an electric field is sufficiently greater than the surface tension of the polymer solution 11, the nanofibers 12 may be spun from the nozzle 15 toward the base 16 or 16' at S3. The nanofibers 12 spun from the nozzle 15 may be stacked on the base 16 or 16' at S4.

Accordingly, the base 16 or 16' and a nanofiber web 121 attached on the base 16 or 16' may constitute the filter.

Referring to FIG. 8, it is possible to compare the surface potential over time of each of a comparison target filter (see a dotted line), which is a filter manufactured by the existing electrospinning device (see FIG. 1) having a collector 6 and the ground electrode 9 provided separately, and the filter (a solid line) of the present disclosure having the conductive base 16 or 16' and the nanofiber web 121 described above with reference to FIGS. 2 to 7. Here, the surface potential may be the surface potential of the collector 6 or the conductive base 16 or 16'.

In this case, the comparison target filter was manufactured by spinning nanofibers to the collector 6 for an initial one hour, and the filter of the present disclosure was also manufactured by spinning nanofibers to the conductive base 16 or 16' for an initial one hour. In addition, the comparison target filter and the filter in the present disclosure were stored at a room temperature after completion of spinning of the nanofibers.

Referring to the dotted line of FIG. 8, it can be seen that the surface potential of the collector 6 of the comparison target filter rises to about 6kV for initial one hour. Because of this, the nanofibers may adhere unevenly on the collector 6. That is, the nanofibers on the collector 6 may have uneven characteristics, such as having uneven diameters or beads. In addition, it can be seen that the surface potential of the collector 6 of the comparison target filter after initial one hour decreases over time, but is maintained at about 2kV for a predetermined period of time. In other words, the electrostatic force of the comparison target filter may be reduced due to contact of moisture with the filter or adhesion of organic substances to the filter, and as a result, the dust collection efficiency of the filter may decrease over time. In addition, post-processing the filter by using isopropanol (IPA) to remove this electrostatic force may damage the filter or reduce efficiency thereof.

Referring to the solid line of FIG. 8, the surface potential of the conductive base 16 or 16' of the filter in the present disclosure may not be formed for initial one hour and even after the initial one hour. That is, since the base 16 or 16' functions as the corresponding electrode of the nozzle 15, the charge of the non-woven fabric 161 or woven fabric 161' may be removed through the conductive material or the wire 162' of the base 16 or 16' (see FIGS. 4 and 5). Accordingly, the nanofibers may be uniformly attached on the conductive base 16 or 16'. That is, the nanofibers on the conductive base 16 or 16' may have uniform characteristics, such as having even diameters and minimizing bead formation. In addition, it is possible to minimize a decline in dust collection efficiency over time of the filter of the present disclosure, which includes the base 16 or 16' and the nanofiber web 121.

Referring to FIG. 9, a protective layer 17 may be coupled on the nanofiber web 121. For example, the protective layer 17 may be coupled on the nanofiber web 121 by a hot-melt adhesive. The protective layer 17 may be a non-woven or woven fabric made of a fibrous material, or may include a polytetrafluoroethylene (PTFE) material. Accordingly, the protective layer 17 may minimize physical or chemical damage to the nanofiber web 121. Particularly, when the protective layer 17 is PTFE, the dust collection efficiency of the filter may be improved.

For example, an antibacterial agent may be coated on the protective layer 17. The antibacterial agent may be an antibacterial metal or antibacterial metal oxide. The antibacterial metal may include copper (Cu), silver (Ag), gold (Au), or platinum (Pt). The antibacterial metal oxide may include zinc oxide (ZnO), copper oxide (Cu₂O, CuO), or titanium dioxide (TiO₂). Accordingly, the filter provided with the protective layer 17 may have an antibacterial effect without increasing pressure loss and may inhibit the growth or survival of microorganisms in the air.

In this case, the above antibacterial agent of the protective layer 17 and the antibacterial agent of the base 16 described above with reference to FIG. 4 may target the same type of microorganisms or bacteria. Alternatively, the above antibacterial agent of the protective layer 17 and the antibacterial agent of the base 16 described above with reference to FIG. 4 may target different types of microorganisms or bacteria.

For example, a photocatalyst may be coated on the protective layer 17. The photocatalyst may be activated by light and may decompose harmful substances in the air through a photochemical reaction. The photocatalyst may include tungsten oxide, titanium oxide, zinc oxide, or zirconium oxide, etc. For example, a cocatalyst may be coated on the protective layer 17 and may help the activation of the photocatalyst. The cocatalyst may include platinum (Pt), rhodium (Rh), ruthenium (Ru), palladium (Pd), silver (Ag), copper (Cu), or zinc (Zn), etc. Accordingly, the filter provided with the protective layer 17 may have a photodecomposition effect of harmful substances without increasing pressure loss.

Meanwhile, an air purifier provided with the filter may include a light source that activates the photocatalyst. For example, the light source may be a light emitting diode (LED). For another example, the light source may be an ultraviolet light emitting diode (UV LED) or an ultraviolet lamp. In this case, the light source not only activates the photocatalyst, but also emits ultraviolet rays toward the filter so that bacteria or microorganisms present in the filter or in the air can be killed.

Any or other embodiments of the present disclosure described above are not exclusive or distinct from each other. In some embodiments or other embodiments of the present disclosure described above, each component or function may be used together or combined.

For example, this means that a component A described in a particular embodiment and/or drawing may be combined with a component B described in other embodiments and/or drawings. That is, even if combination between components is not directly explained, this means that combination is possible, except in cases where it is explained that combination is impossible.

The above detailed description should not be construed as restrictive in any respect and should be considered illustrative. The scope of the present disclosure should be determined by reasonable interpretation of the appended claims, and all changes within the equivalent scope of the present disclosure are included in the scope of the present disclosure.

## Claims

1. A filter having nanofibers formed by electrospinning, the filter comprising:
a base having conductivity; and
a nanofiber web formed by attaching the nanofibers on the base.

2. The filter of claim 1, wherein the base comprises:
a non-woven fabric made of a fibrous material; and
a conductive material provided on the non-woven fabric or coated on the non-woven fabric.

3. The filter of claim 2, wherein the conductive material is an antibacterial metal or an antibacterial metal oxide.

4. The filter of claim 3, wherein the antibacterial metal comprises copper (Cu), silver (Ag), gold (Au), or platinum (Pt), and the antibacterial metal oxide comprises zinc oxide (ZnO), copper oxide (Cu₂O, CuO), or titanium dioxide (TiO₂).

5. The filter of claim 1, wherein the base comprises:
a woven fabric made of a fibrous material; and
wires having conductors, intersecting the woven fabric, and being disposed at regular intervals on the woven fabric.

6. The filter of claim 5, wherein the wires further comprise insulating materials covering the conductors.

7. The filter of claim 1, further comprising:
a protective layer attached on the nanofiber web by a hot-melt adhesive,
wherein the protective layer is a non-woven or woven fabric made of a fibrous material, or PTFE.

8. The filter of claim 7, wherein the protective layer further comprises an antibacterial agent coated on the protective layer, wherein the antibacterial agent is an antibacterial metal or an antibacterial metal oxide.

9. The filter of claim 8, wherein the base comprises:
a non-woven fabric made of a fibrous material; and
a conductive material provided on the non-woven fabric or coated on the non-woven fabric, with the conductive material being an antibacterial metal or an antibacterial metal oxide,
wherein the conductive material is the same as or different from the antibacterial agent.

10. The filter of claim 7, wherein the protective layer further comprises a photocatalyst coated on the protective layer.

11. The filter of claim 1, wherein a raw material for each of the nanofibers comprises PAN, PES, PA, or PVDF, and the base comprises PP, PE, PET, PES, or PA.

12. A method for manufacturing a filter by attaching nanofibers on a base, the method comprising:
filling a syringe having a nozzle with a polymer solution which is a raw material of each of the nanofibers;
applying a + high voltage to the nozzle; and
spinning the nanofibers from the nozzle toward the base,
wherein the base functions as a corresponding electrode of the nozzle.

13. The method of claim 10, wherein the base has a ground electrode, or a - high voltage is applied thereto.
